# EUROPÄISCHE PATENTSCHRIFT

(11) **EP 1 186 930 B1**
(45) Veröffentlichungstag und Bekanntmachung des Hinweises auf die Patenterteilung: **08.09.2004**
(21) Anmeldenummer: 01117311.9
(22) Anmeldetag: 18.07.2001
(51) Int. Cl.: G02B 21/00

(54) **Vorrichtung zur Untersuchung und Manipulation von mikroskopischen Objekten**
Device for investigation and manipulation of microscopic objects
Appareil pour investigation et manipulation d'objects microscopiques

(30) Priorität: 08.08.2000 DE 10039520
(43) Veröffentlichungstag der Anmeldung: 13.03.2002
(73) Patentinhaber: Leica Microsystems Heidelberg GmbH, 68165 Mannheim (DE)
(72) Erfinder: Knebel, Werner, Dr., 76709 Kronau (DE); Hoffmann, Jürgen, Dr., 65191 Wiesbaden (DE)
(74) Vertreter: Reichert, Werner F., Dr.

(56) Entgegenhaltungen:
- EP-A- 0 517 454
- US-A- 5 825 533
- US-A- 6 094 300
- VISSCHER K ET AL: "SINGLE BEAM OPTICAL TRAPPING INTEGRATED IN A CONFOCAL MICROSCOPE FOR BIOLOGICAL APPLICATIONS" CYTOMETRY, ALAN LISS, NEW YORK, US, Bd. 12, 1991, Seiten 486-491, XP000973844 ISSN: 0196-4763
- VISSCHER K ET AL: "Construction of Multiple-Beam Optical Traps with Nanometer-Resolution Position Sensing" IEEE JOURNAL OF SELECTED TOPICS IN QUANTUM ELECTRONICS, Bd. 2, Nr. 4, 1. Dezember 1996 (1996-12-01), Seiten 1066-1076, XP002194233
- GREULICH K O ET AL: "MICROMANIPULATION BY LASER MICROBEAM AND OPTICAL TWEEZERS: FROM PLANT CELLS TO SINGLE MOLECULES" JOURNAL OF MICROSCOPY, OXFORD, GB, Bd. 198, Nr. PART 3, Juni 2000 (2000-06), Seiten 182-187, XP002939024 ISSN: 0022-2720

## Beschreibung

Die vorliegende Erfindung betrifft eine Vorrichtung zur Untersuchung und Manipulation von mikroskopischen Objekten, mit einem Mikroskop, mindestens einer zur Beleuchtung des Objekts dienenden ersten Lichtquelle, die einen Beleuchtungsstrahlengang definiert, einem zur Detektion des vom Objekt zurückkehrenden Lichts dienenden Detektor, der einen Detektionsstrahlengang definiert, einer zur Objektmanipulation dienenden zweiten Lichtquelle die einen Manipulationslichtstrahlengang definiert.

Vorrichtungen der gattungsbildenden Art sind in der Praxis seit geraumer Zeit bekannt. Lediglich beispielhaft wird auf "Micromanipulation by Light in Biology and Medicine" von Karl Otto Greulich, Birkhäuser Verlag 1999 verwiesen. Dort wird beschrieben, wie bei der mikroskopischen Untersuchung von Objekten mit Hilfe von fokussierten Laserstrahlen Kräfte auf Partikel ausgeübt, Partikel zerkleinert, perforiert oder Ablationen vorgenommen werden können. Die Möglichkeiten der Objektmanipulation werden insbesondere in der Zellbiologie eingesetzt, um beispielsweise das Innere ungeöffneter Zellen ungehindert zu manipulieren. Hierbei sind vor allem zwei unterschiedliche Maniputationsvor gänge üblich. Einerseits werden Objekte oder Objektbereiche mit fokussiertem Infrarotlicht beleuchtet, wodurch einzelne Partikel der Objekte bzw. Objektbereiche in der Nähe des Manipulationsfokusses eingefangen und bei Veränderung der Position des Manipulationsfokusses in der Fokalebene mit dem Fokus mitbewegt werden (optische Pinzette), so dass diese beispielsweise mit einer Kraft beaufschlagbar sind. Wird ein Objektbereich mit gepulstem, fokussiertem UV-Licht beaufschlagt, so kann biologisches Material aufgrund einer hohen Energiedichte des UV-Lichts mit hoher räumlicher Auflösung zerschnitten oder perforiert werden (Nanoskalpell).

Bei einer weiteren Untersuchungsmethode in der Zellbiologie werden Objekte mit sogenannten "Caged-Compound"-Verbindungen präpariert. Diese Verbindungen enthalten Calcium oder Aminosäuren, wie beispielsweise Glutamat, und sind mit Komplexbildnern (Gelators) verbunden bzw. umgeben. Diese Verbindungen können durch Einstrahlung von UV-Licht aufgebrochen werden, wodurch das Calcium oder das freiwerdende Glutamat in der Lage ist, weitere Reaktionen in der Zelle auszulösen (Photoaktivierung). Eine Photoaktivierung kann auch mit Hilfe von Zwei-Photonen-Prozessen erzielt werden. Lediglich beispielhaft wird hierzu auf die US 5,034,613 und auf die DE 44 14 940 verwiesen, die die Anwendung der Zwei-Photonen-Absorbtion von Fluoreszenzfarbstoffen bei der Rastermikroskopie beschreiben.

Mit Hilfe von optischen Pinzetten ist es möglich, Bindungskräfte zwischen Zellelementen, beispielsweise zwischen Mikrotubuli und anderen Zytosklettelementen, zu bestimmen oder Kontahierungskräfte von Muskelfasern zu messen.

Derzeit wird das zur Manipulation des Objekts dienende Laserlicht in den Strahlengang eines konventionellen Lichtmikroskops eingekoppelt. Die Manipulation des Objekts erfolgt im Allgemeinen durch Bewegen der Probe mit dem Mikroskoptisch. Die Manipulation und die Untersuchung bzw. Beobachtung des Objekts erfolgt dabei entweder im Fluoreszenzlicht-Modus oder im Durchlicht-Modus eines konventionellen Mikroskops.

Bei diesen Untersuchungen und Manipulationen von Objekten ist jedoch problematisch, dass aufgrund der Abbildungseigenschaften eines konventionellen Mikroskops nur der Objektbereich zweidimensional abgebildet wird, der sich in dem Tiefenschärfenbereich des Mikroskopobjektivs befindet. Die Objektbereiche jenseits dieses Tiefenschärfenbereichs sind jedoch dem Bild störend überlagert, was eine exakte Objektmanipulation erschwert bzw. unmöglich macht. Dementsprechend werden solche Untersuchungen und Manipulationen hauptsächlich an Objekten ausgeführt, die eine geringe Ausdehnung entlang der optischen Achse aufweisen, so dass diese Objekte komplett in dem Tiefenschärfenbereich des Mikroskopobjektivs gebracht werden können. Somit kann dann das Objekt bei einem Abbildungsvorgang vollständig abgebildet werden und störende Überlagerungen von Objektbereichen jenseits des Tiefenschärfenbereichs des Mikroskopobjektivs können auf diese Weise vermieden werden.

Sollen nun Untersuchungen und Manipulationen an Objekten durchgeführt werden, die eine - verglichen zum Tiefenschärfenbereich des Mikroskopobjektivs - große Ausdehnung entlang der optischen Achse haben, treten zum einen die bereits beschriebenen Abbildungsprobleme auf, zum anderen ist es nicht ohne weitere möglich, Objektmanipulationen in verschiedenen Ebenen parallel zur Fokalebene des Mikroskopobjektivs durchzuführen. Der Grund hierfür ist, dass eine gleichzeitige Manipulation an mehreren Objektstellen mit unterschiedlicher Position entlang der optischen Achse die Foki des zu manipulierenden Lichts entsprechend unterschiedlich einzustellen wären, was derzeit bei herkömmlichen Geräten zur Objektmanipulation nicht vorgesehen ist. Eine entsprechende Ansteuerung einer solchen Manipulationsvorrichtung durch einen Benutzer würde weiterhin voraussetzen, dass zur Einstellung der zu manipulierenden Objektbereiche das dreidimensionale Objekt mit einer hinreichenden Auflösung entlang der optischen Achse abgebildet werden kann, was bei einem konventionellen Mikroskop jedoch jenseits einer Genauigkeit von einem Mikrometer so gut wie nicht möglich ist.

Der Einsatz eines Lasers für ein Nanoskalpell schneidet in nachteiliger Weise zylinderförmige Ausschnitte in das dreidimensionale Objekt, so dass diese Art der Manipulation für viele Anwendungen ungeeignet ist.

Aus der DE 199 24 709 ist eine Vorrichtung bekannt, mit der Bauteile schnell, mit hoher Auflösung und präzise positioniert werden können. Insbesondere kann mit dieser Vorrichtung ein Objektivrevolver eines Mikroskops entlang der optischen Achse positioniert werden können (Objektivrevolverscannanordnung).

Aus der DE 196 53 413 bzw. der EP 0 753 779 sind Vorrichtungen bekannt, die kollimiertes Laserlicht in 20 bis 50 Beleuchtungsfoki in die Zwischenbildebene bzw. Objektebene eines Mikroskops fokussieren können. Bei dem Licht handelt es sich um Laserlicht, das zur Zweiphotonen-Anregung von Fluoreszenzobjekten geeignet ist.

Aus den DE 196 54 210 C2 und DE 100 33 549.7 sind für sich gesehen Vorrichtungen zum Ablenken eines Lichtstrahls im Wesentlichen in zwei senkrecht zueinander stehenden Richtungen bekannt.

Aus der DE 44 14 940 und US 5,034,613 sind konfokale Rastermikroskope bekannt, bei denen Fluoreszenzobjekte mit Zweiphotonen-Prozessen zur Fluoreszenz angeregt werden.

Der vorliegenden Erfindung liegt daher die Aufgabe zugrunde, auch dreidimensionale Objekte zu untersuchen und zu manipulieren, deren Ausdehnung entlang der optischen Achse größer als der Tiefenschärfenbereich des verwendeten Mikroskopobjektivs ist, wobei eine Objektmanipulation auch an allen Stellen des dreidimensionalen Objekts möglich sein soll. Darüber hinaus soll eine dreidimensionale Detektion des Objekts möglich sein, bei der eine Diskriminierung der Objektlichtbeiträge erfolgt, die von Bereichen kommen, die jenseits des Tiefenschärfenbereichs des Mikroskopobjektivs liegen.

Die erfindungsgemäße Vorrichtung der gattungsbildenden Art löst die voranstehende Aufgabe durch die Merkmale des Patentanspruchs 1.

Erfindungsgemäß ist zunächst erkannt worden, dass mit einem konfokalen Rastermikroskop die vom Objekt kommenden und außerhalb des Tiefenschärfenbereichs des Mikroskopobjektivs stammenden Lichtbeiträge aufgrund des konfokalen Prinzips wirksam unterdrückt bzw. ausgeblendet werden können. Weiterhin ist die Auflösung entlang der optischen Achse eines konfokalen Rastermikroskops höher als die eines konventionellen Lichtmikroskops, so dass einerseits eine dreidimensionale Abbildung des zu manipulierenden Objekts möglich ist und andererseits - aufgrund der vorliegenden dreidimensionalen Information des Objekts - eine dreidimensionale Objektmanipulation hierdurch ermöglicht wird. Die dreidimensionale Objektinformation mit hoher Auflösung entlang der optischen Achse ist eine Grundvoraussetzung für eine exakte dreidimensionale Ansteuerung des Manipulationslichtstrahls. Eine Objektmanipulation kann die Anwendung mindestens einer optischen Pinzette, die Durchführung einer Objektveränderung durch mindestens ein Nanoskalpell, das Ausbleichen von Fluoreszenzfarbstoffen und/oder das Freisetzen von Caged-Compund-Verbindungen umfassen.

In einer bevorzugten Ausführungsform sind mindestens zwei Strahlablenkvordichtungen vorgesehen. Als Strahlablenkvorrichtung könnte beispielsweise ein Spiegel vorgesehen sein, der um zwei Achsen drehbar gelagert ist und hierbei vorzugsweise kardanisch aufgehängt ist. Weiterhin könnte eine Strahlablenkvorrichtung ein Spiegelsystem, bestehend aus zwei jeweils um eine Achse drehbar gelagerten Spiegeln bestehen. In einer bevorzugten Ausführungsform wird eine Vorrichtung zum Ablenken eines Lichtstrahls im Wesentlichen in zwei senkrecht zueinander stehenden Richtungen gemäß der DE 196 54 210 C2 bzw. DE 100 33 549.7 eingesetzt. Die Verwendung eines AOD's (Acousto-Optical-Deflector) oder eines EOD's (Electro-Optical-Modulator) als Strahlablenkvorrichtung wäre ebenfalls denkbar.

In einer konkreten Ausführungsform ist eine Ablenkung des Beleuchtungslichtstrahls durch eine Strahlablenkvorrichtung vorgesehen. Der Manipulationslichtstrahl wird ebenfalls von einer Strahlablenkvorrichtung abgelenkt. Die Ablenkung des Beleuchtungslichtstrahls erfolgt unabhängig von der Ablenkung des Manipulationslichtstrahls, da im Allgemeinen der Beleuchtungslichtstrahl zur zwei- bzw. dreidimensionalen Detektion des Objekts dient und der Manipulationslichtstrahl zur Manipulation des Objekts bzw. einzelner Objektbereiche und daher eine andere Ablenkung als bei der des Beleuchtungslichtstrahls erforderlich ist.

Erfindungsgemäß ist vorgesehen, dass der Manipulationslichtstrahlengang und der Detektions/Beleuchtungsstrahlengang mit einem Strahlteiler zusammenführbar sind, wobei die Strahlzusammenführung mit einem der im gemeinsamen Strahlengang angeordneten Scanspiegel einer Strahlablenkvorrichtung erfolgt, wobei der Scanspiegel für einen der beiden Strahlengänge transparent ist und, für den anderen Strahlengang als Spiegel wirkt.

In einer besonders vorteilhaften Ausführungsform ist vorgesehen, dass die Fokusposition des Manipulationslichts entlang der optischen Achse veränder bar ist. Hierdurch ist eine dreidimensionale Objektmanipulation möglich, indem die Fokusposition des Manipulationslichts an unterschiedlichen Positionen entlang der optischen Achse eingestellt werden kann, so dass die Objektmanipulation auch in Objektbereichen möglich ist, die jenseits des momentan eingestellten Tiefenschärfenbereichs des Mikroskopobjektivs liegen. Im konkreten könnte die Veränderung der Fokusposition des Manipulationslichts durch zwischen Lichtquelle und Objekt verschiebbar angeordnete Fokussiermittel erfolgen. Eine Strahlaufteilung des Manipulationslichts wäre ebenfalls denkbar, um nämlich mehrere Manipulationslichtfoki in unterschiedlichen Ebenen entlang der optischen Achse zu positionieren. Hierbei könnte das Manipulationslicht in soviel Teilstrahlen aufgeteilt werden, wie es unterschiedliche Ebenen entlang der optischen Achse gibt, in denen Manipulationslichtfoki zu positionieren sind. Hierbei könnte jedem Teilstrahl des Manipulationslichts ein diesem Teilstrahl zugeordnetes Fokussiermittel vorgesehen sein. Durch das bzw. die lediglich im Manipulationslichtstrahlengang wirkenden Fokussiermittel ist eine Positionierung einer Fokusposition des Manipulationslichts auch außerhalb des aktuell eingestellten Tiefenschärfenbereichs des Mikroskopobjektivs möglich.

Die Veränderung der Manipulationslichtfokusposition geht in einer bevorzugten Ausführungsform mit einer Veränderung der Beleuchtungslichtfokusposition einher. Insbesondere ist vorgesehen, dass die Veränderung der beiden Fokuspositionen simultan erfolgt. Hierbei könnte die Fokusveränderung durch eine gemeinsame Objektivrevolverscananordnung erfolgen, wie sie beispielsweise aus der DE 199 24 709 bekannt ist. In diesem Fall verläuft der Detektions-/Beleuchtungsstrahlengang und der Manipulationslichtstrahlengang gemeinsam durch das von der Objektivrevolverscananordnung bewegte optische Bauteil, das beispielsweise in Form eines Mikroskopobjektivs ausgeführt ist.

In einer bevorzugten Ausführungsform dient der Manipulationslichtstrahl als optische Pinzette und/oder als Nanoskalpell. Zur Veränderung der Form des Manipulationslichtfokusses ist eine Zoom-Optik im Manipulationslichtstrahlengang vorgesehen. Somit kann beispielsweise der Fokusradius des Manipulationslichtstrahls mit Hilfe der Zoom-Optik verkleinert oder vergrößert werden, was eine Veränderung der Kraft auf das zu manipulierende Objekt zur Folge hat, bzw. die Form des Nanoskalpells verändern kann.

Die Strahlablenkvorrichtung bzw. die Strahlablenkvorrichtungen sind in einer konkreten Ausführungsform an der Mikroskopschnittstelle für die konventionelle Auflichtbeleuchtung und/oder an einer zusätzlichen Schnittstelle am Mikroskop ankoppelbar. Hierdurch können in vorteilhafter Weise bereits bestehende Mikroskopschnittstellen genutzt werden, was eine einfache Aufrüstung bereits installierter Mikroskopsysteme ermöglicht.

Zu Einkoppeln des Beleuchtungs- und/oder Manipulationslichts ist mindestens ein spektral selektives Element vorgesehen. Mit dem spektral selektiven Element kann Licht mindestens einer bestimmten Wellenlänge selektiert und in den jeweiligen Strahlengang eingekoppelt werden und/oder die Lichtleistung des einzukoppelnden Lichts verändert werden. Das spektral selektive Element könnte ein AOTF (Acousto-Optical-Tunable-Filter), AOBS (Acousto-Optical-Beam-Splitter), AOD (Acousto-Optical-Deflector) und/oder EOM (Electro-Optical-Modulator) umfassen und von einem Steuerrechner, vorzugsweise Abhängigkeit der Beleuchtungs- und/oder Manipulationsstrahlposition, angesteuert werden. Hierdurch ist eine selektive Einkopplung von Lich mehrerer Wellenlängen in den Beleuchtungs- und/ode Manipulationslichtstrahlengang möglich, wobei die eingekoppelte Lichtleistung auch in Abhängigkeit der entsprechenden Strahlposition gesteuert werder kann. Insbesondere kann hierdurch ein schnelles Ein- und Ausschalten des Manipulationsstrahls realisiert werden, was bei der gleichzeitigen Manipulatior mehrerer Manipulationsstellen mit einem Manipulationslichtstrahl im Allgemeinen erforderlich ist. Hierzu muss der Manipulationslichtstrahl zu den einzelner Manipulationsstellen abgelenkt werden und während des Ablenkvorgangs muss der Manipulationslichtstrahl aus dem Manipulationslichtstrahlengang ausgeblendet werden.

Beispielsweise kann durch diese Vorgehensweise die Kontraktionskraft einer Muskelfaser indirekt gemessen werden. Hierzu ist die Muskelfaser mit Caged-Compound-Release-Calcium präpariert und zur Untersuchung bzw. Manipulation in das erfindungsgemäße Mikroskopsystem eingebracht. Zur Objektdetektion wird die Muskelfaser kontinuierlich mit Beleuchtungslicht einer Wellenlänge von 488 nm abgetastet. Lediglich im Bereich der Muskelfaser wird über den Manipulationsstrahlengang UV-Licht (z.B. 365 nm) eingestrahlt, wodurch das Caged-Compuond-Release-Calcium freigesetzt wird, wodurch die Muskelfaser kontrahiert. An den Muskelfaserenden wurde ebenfalls präparativ Aktien oder Myosin angekoppelt. Das Aktien oder Myosin wurde zuvor mit einer optischen Pinzette eingefangen. Durch die Kontraktion der Muskelfaser wird eine Auslenkung des Aktiens bzw. Myosins von der Ausgangsposition erzeugt, wobei die Auslenkung proportional zur Kontraktionskraft der Muskelfaser ist. Durch Messung der Auslenkung der Ausgangspositionen während der Auslösung der Muskelkontraktion kann auf die Kontraktionskraft geschlossen werden.

Weiterhin ist vorgesehen, dass die Objektmanipulation zur Untersuchung der Informationsweitergabe von Zelle zu Zelle eingesetzt werden kann. Der Infor mationstransport von Zelle zu Zelle vollzieht sich zum einen durch elektrische Informationsübertragung und zum anderen durch die Weitergabe von Neurotransmittem, wie z.B. Calcium. So kann beispielsweise eine Caged-Calcium-Verbindung in eine Zelle eingebracht werden, die zu einem vorgegebenen Zeitpunkt durch Einstrahlung von UV-Licht oder Infrarotlicht aufgebrochen werden kann. Hierdurch löst das freiwerdende Calcium eine Reaktion in der Zelle aus, die sodann unabhängig von der Manipulation verläuft. Der gesamte Vorgang kann zur Untersuchung mit dem konfokalen Rastermikroskop ununterbrochen detektiert werden, so dass die Informationsweiterleitung an die mit einem Fluoreszenz-Calcium-Indikator präparierte Nachbarzelle nachweisbar ist. Es ist bereits bekannt, dass die Reaktion der Nachbarzelle ausbleiben kann, wenn innerhalb eines bestimmten Zeitfensters die Reizinformation einer dritten Zelle eintrifft. Zur Untersuchung dieser Phänomenologie ist es hilfreich, quasi gleichzeitig oder definiert zeitversetzt eine Informationsweiterleitungsreaktion in zwei benachbarten Zellen auszulösen. Diese Untersuchungen setzten eine schnelle Objektdetektion voraus, die beispielsweise durch eine Strahlablenkvorrichtung gemäß der DE 196 54 210 oder DE 100 33 549 erzielt werden kann.

Das während der Untersuchung und Manipulation detektierte Objekt samt Manipulationsstellen wird vorzugsweise an einem Monitor dargestellt. Hierbei ist eine zwei- und/oder dreidimensionale Darstellung vorgesehen. Die dreidimensionale Darstellung erfolgt vorzugsweise in einer perspektivischen Ansicht, wobei der perspektivische Ansichtspunkt frei gewählt wird. Die Wahl des Ansichtspunktes könnte mit Zeigegeräten, beispielsweise mit Maus oder Joystick, erfolgen.

Zur Untersuchung des Objekts ist vorgesehen, dass von dem Objekt und gegebenenfalls zusätzlich von den Manipulationsstellen Fluoreszenz- und/oder Reflexionslicht detektiert wird. Die Fluoreszenzanregung könnte hierbei auch mit Methoden der Mehrphotonenanregung erfolgen, wie sie beispielsweise in der DE 44 14 940 bzw. US 5,034,613 beschrieben werden.

In Abhängigkeit der jeweiligen Anwendung ist vorgesehen, dass die Wellenlänge des Beleuchtungslichtstrahls gewählt werden kann. Insbesondere ist es hierdurch möglich, jederzeit während des Abtastens der Probe Licht mindestens einer weiteren Wellenlänge hinzuzuschalten. Hierzu ist eine Objektbeleuchtung durch mehrere Laser und/oder durch die Verwendung eines Mehrlinienlasers vorgesehen.

In einer weiteren Variante könnte beispielsweise ein "Mini-Labor" im erfindungsgemäßen Mikroskopsystem realisiert werden. Dieses Mini-Labor könnte verschiedene Bereiche in der Objektaufnahmevorrichtung aufweisen, in denen ein Objekt verschiedenen Verarbeitungsschritten unterzogen wird. Diese unterschiedlichen Bereiche könnten unterschiedliche Umgebungs- bzw. Einbettungsmedien aufweisen, so dass für den jeweiligen Bearbeitungsschritt geeignete Randbedingungen vorliegen. Ein Objekt könnte mit Hilfe der optischen Pinzette von einem Bereich zu einem anderen Bereich transportiert werden, wo beispielsweise bei fortlaufender Objektdetektion Teile einer Zelle oder der vollständige Zellkern aus der Zelle herausgeschnitten wird und sodann mit einer weiteren optischen Pinzette zu einem anderen Bereich transportiert wird, wo eine Weiterverarbeitung des herausgeschnittenen Zellkerns erfolgt.

Zur ausführlichen und umfassenden Objektuntersuchung ist vorgesehen, dass ein Objekt simultan mit mindestens zwei Lichtstrahlen abgetastet wird, die von jeweils unterschiedlichen Strahlablenkvorrichtungen abgelenkt werden. Hierbei ist vorgesehen, dass die Strahlablenkvorrichtungen synchron zueinander arbeiten. Beispielsweise könnte ein Lichtstrahl zu Einphotonenanregung, ein zweiter Lichtstrahl zur Mehrphotonenanregung des Fluoreszenzobjekts dienen.

Im Hinblick auf eine schnelle Bildaufnahme des Objekts wird dieses mit mehreren Beleuchtungsfoki oder mit einem linienförmigen Beleuchtungsmuster abgetastet und entsprechend detektiert. Zur Objektabtastung mehrerer Beleuchtungsfoki könnte beispielsweise eine aus den DE 196 53 413 oder EP 0 753 779 bekannten Anordnungen verwendet werden, die in Verbindung mit Zweiphotonen-Fluoreszenzanregung arbeiten. Ein linienförmiges Beleuchtungsmuster könnte beispielsweise durch Einbringen eines Beleuchtungsspalts und unter Verwendung von Zylinderlinsen erzeugt werden.

In einer besonders bevorzugten Weise wird mindestens ein zwei- oder dreidimensionaler Teilbereich eines Objekts festgelegt, der mit erhöhter Photonenstatistik, mit verminderter Abtastgeschwindigkeit und/oder mit höherer Ortsauflösung detektiert wird. Bei diesem Teilbereich handelt es sich vorzugsweise um den zu untersuchenden Teilbereich des Objekts, der für die jeweilige Anwendung relevant ist. Der übrige Bereich könnte mit einer verminderten Photonenstatistik, mit erhöhter oder maximaler Abtastgeschwindigkeit und/oder mit verminderter Ortsauflösung detektiert werden. Somit kann die gesamte Untersuchung des Objekts auf die wesentlichen Bereiche konzentriert werden, wodurch eine maximale Informationsausbeute dieser Bereiche des Objekts detektierbar sind. Alternativ hierzu könnte auch vorgesehen sein, dass der übrige Bereich überhaupt nicht detektiert wird und dass der Beleuchtungsstrahl derart abgelenkt wird, dass er von einem Teilbereich einen anderen Teilbereich auf dem kürzesten Weg erreicht. Bei dieser Vorgehensweise werden dann lediglich die festgelegten Teilbereiche ausgehend detektiert.

Es gibt nun verschiedene Möglichkeiten, die Lehre der vorliegenden Erfindung in vorteilhafter Weise auszugestalten und weiterzubilden. Dazu ist auf die Zeichnung zu verweisen. In der Zeichnung zeigen
- Fig. 1: eine schematische Darstellung eines erfindungsgemäßen Ausführungsbeispiels einer Vorrichtung zur Untersuchung und Manipulation von mikroskopischen Objekten,
- Fig. 2: eine schematische Darstettung eines gegenbeispiels, das nicht unter Anspruch 1 fällt einer Vorrichtung zur Untersuchung und Manipulation von mikroskopischen Objekten
- Fig. 3: eine schematische Darstellung eines weiteren gegenbeispiels einer erfindungsgemäßen Vorrichtung zur Untersuchung und Manipulation von mikroskopischen Objekten,
- Fig. 4: eine schematische Darstellung eines Verfahrensschritts zur Bestimmung von Kontraktionskräften einer Muskelzelle.
- Fig. 5: eine schematische Darstellung einer Schnittebene senkrecht zu der in Fig. 4 dargestellten Ebene und
- Fig. 6: eine schematische Darstellung eines Verfahrensschritts zur Untersuchung der Informationsweiterleitung zwischen drei Zellen.

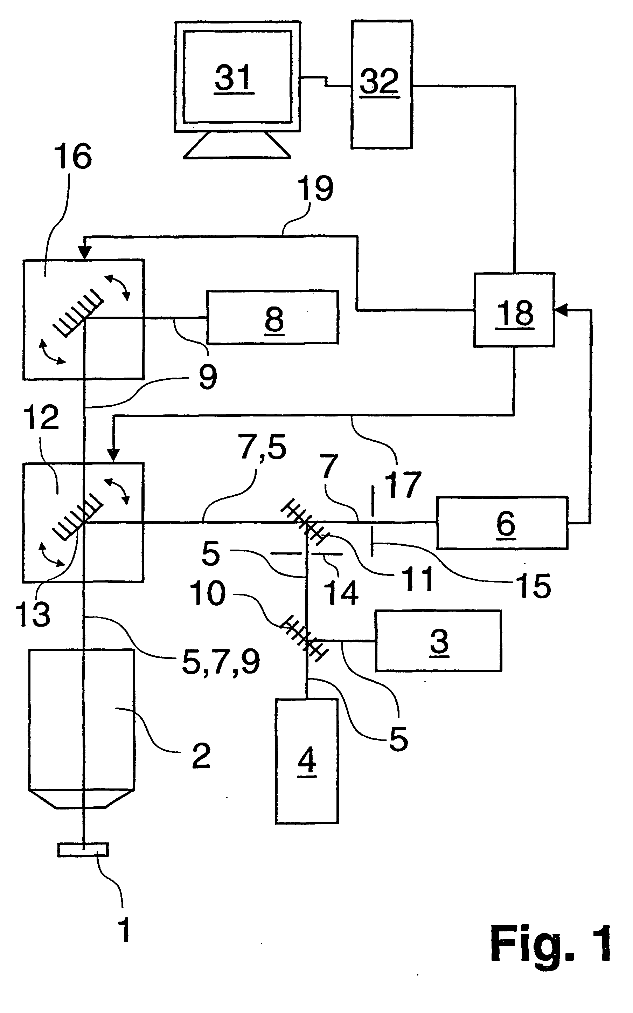

Fig. 1 zeigt eine Vorrichtung zur Untersuchung und Manipulation von mikroskopischen Objekten 1 mit einem lediglich als Mikroskopobjektiv dargestellten Mikroskop 2, mit zwei zur Beleuchtung des Objekts 1 dienenden Lichtquellen 3, 4, einem Beleuchtungsstrahlengang 5, einem zur Detektion des vom Objekt 1 zurückkehrenden Lichts dienenden Detektor 6, einem Detektionsstrahlengang 7, einer zur Objektmanipulation dienenden zweiten Lichtquelle 8 und einem Manipulationslichtstrahlengang 9.

Das Licht der mindestens einen ersten Lichtquelle 3, 4 wird mit einem Strahlteiler 10 koaxial zusammengeführt und in Richtung des dichroitischen Strahlteilers 11 reflektiert. Das von dem dichroitischen Strahlteiler 11 reflektierte Beleuchtungslicht der ersten Lichtquellen 3, 4 wird von der Strahlablenkvorrichtung 12 in zwei im wesentlichen senkrecht zueinanderstehenden Richtungen abgelenkt. Hierzu ist ein Scanspiegel 13 vorgesehen, der kardanisch aufgehängt ist und um zwei senkrecht zueinander stehenden Achsen (nicht eingezeichnet) gedreht werden kann. Das vom Scanspiegel 13 reflektierte Licht wird in das schematisch dargestellte Mikroskop 2 eingekoppelt, wobei das Mikroskopobjektiv 2 das Beleuchtungslicht im Objektbereich fokussiert.

Erfindungsgemäß handelt es sich bei dem Mikroskop um ein konfokales Rastermikroskop, dass nämlich ein Beleuchtungspinhole 14 und ein dazu optisch konjugiertes konfokales Detektionspinhole 15 aufweist.

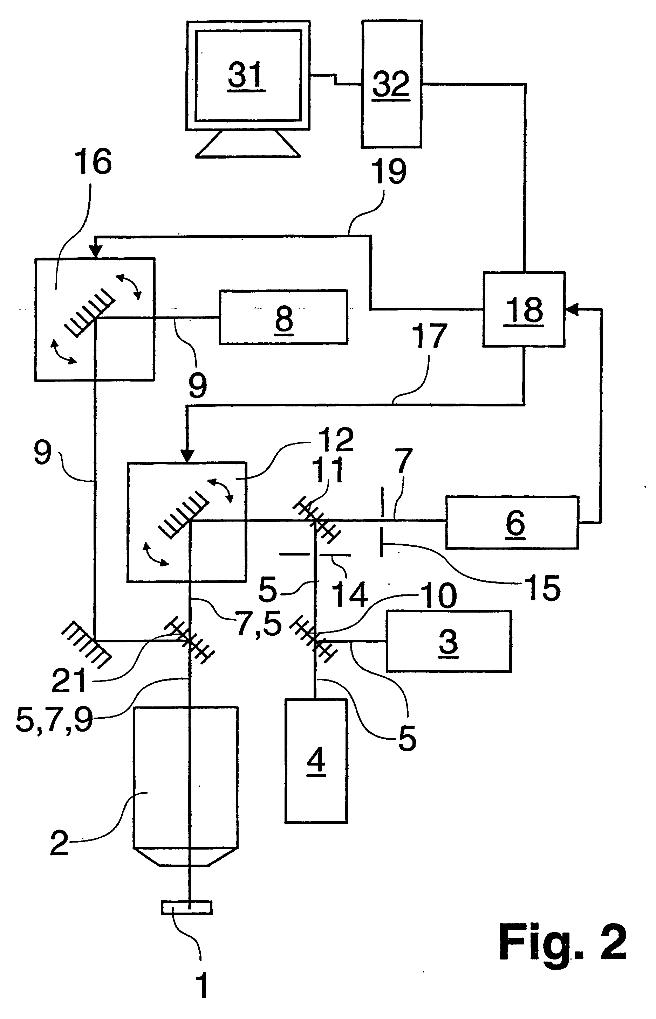

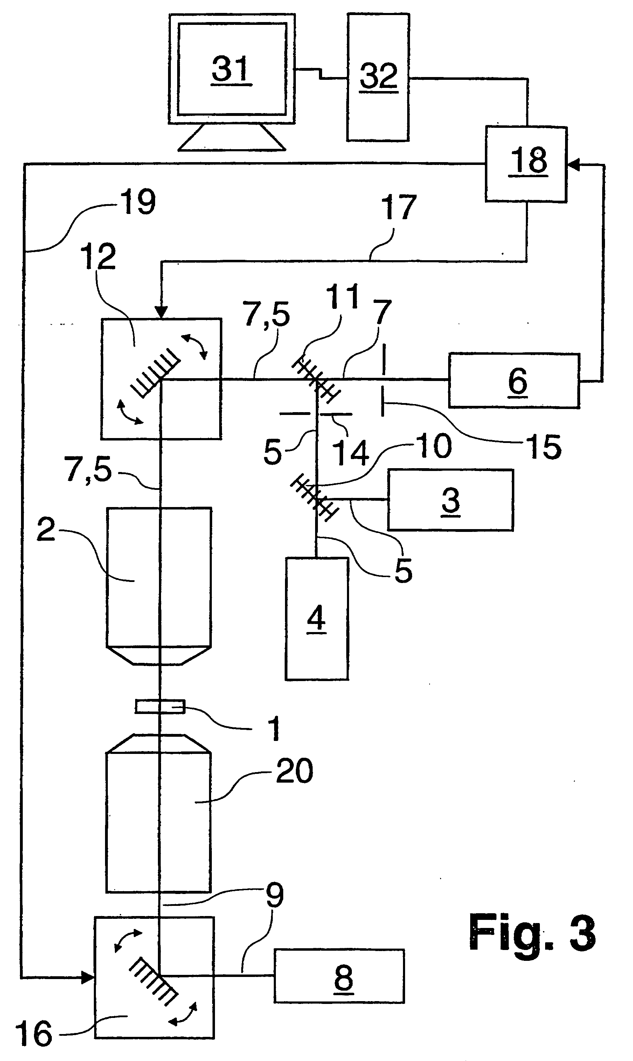

Bei demAusführungsbeispieleftlder Fig. 1 und den gegenbeispielen der Fig. 2 und 3 sind zwei Strahlablenkvorrichtungen 12, 16 vorgesehen. Hierbei lenkt die Strahlablenkvorrichtung 12 den Beleuchtungslichtstrahl 5 ab, die Strahlablenkvorrichtung 16 hingegen den Manipulationslichtstrahl 9. Die Ablenkung des Beleuchtungslichstrahls 5 erfolgt unabhängig von der Ablenkung des Manipulationslichtstrahls 9. Die Strahlablenkvorrichtung 12 wird über Verbindung 17 von dem Steuerrechner 18 angesteuert. Die Strahlablenkvorrichtung 16 wird über die Steuerverbindung 19 von dem Steuerrechner 18 angesteuert.

In Fig. 3 ist gezeigt, dass der Manipulationslichtstrahlengang 9 weitgehend getrennt von dem Detektionsstrahlengang 7 und dem Beleuchtungsstrahlengang 5 verläuft. Hierbei verläuft der Beleuchtungsstrahlengang 5 bzw. der Detektionsstrahlengang 7 durch das Mikroskopobjektiv 2 und der Manipulationslichtstrahlengang 9 verläuft durch ein zweites Mikroskopobjektiv 20, das bezüglich der Fokalebene des Mikroskopobjektivs 2 dem Mikroskopobjektiv 2 gegenüberstehend angeordnet ist.

In den Fig. 1 und 2 wird der Manipulationsstrahlengang 9 und der Detektions/Beleuchtungsstrahlengang 7, 5 mit einem Strahlteiler 21 bzw. 13 zusammengeführt. Hierbei ist der Strahlteiler 21 aus Fig. 2 als Farbstahlteiler ausgeführt, der Licht der Manipulationslichtquelle 8 zum Mikroskopobjektiv 2 reflektiert und der für das Beleuchtungs- und Detektionslicht 5, 7 transparent ist. Der Scanspiegel 13 der Strahlablenkvorrichtung 12 aus Fig. 1 dient zur Strahlzusammenführung des Beleuchtungs-/Detektionslichts 5, 7 und dem Manipulationslichtstrahlengang 9. Hierbei ist der Scanspiegel 13 für das Licht der Manipulationslichtquelle 8 transparent, das Beleuchtungs-/Detektionslicht 5, 7 wird an dem Scanspiegel 13 in das Mikroskopobjektiv 2 reflektiert.

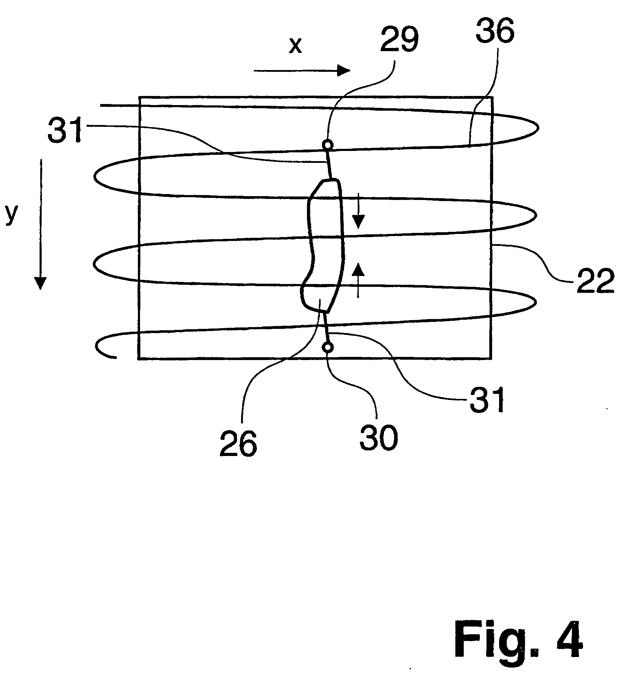

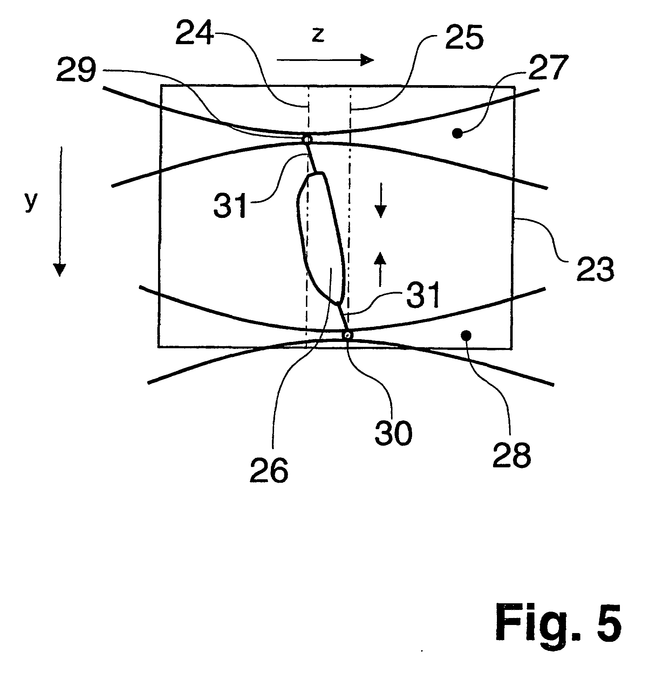

Bei dem Verfahren zur Untersuchung und Manipulation von mikroskopischen Objekten 1 erfolgt die Objektmanipulation simultan zur konfokalen Objektdetektion. Während der Objektmanipulation erfolgt eine dreidimensionale Objektdetektion. Fig. 4 zeigt einen Ausschnitt eines detektierten dreidimensionalen Objektdatensatzes in Form einer xy-Schnittebene 22. Fig. 5 zeigt einen Ausschnitt aus dem gleichen detektierten Datensatz in Form einer yz-Schnittebene 23. Die Objektmanipulation erfolgt hierbei dreidimensional, zum einen in der strichpunktiert angedeuteten xz-Manipulationsebene 24 sowie in der ebenfalls strichpunktiert angedeuteten xz-Manipulationsebene 25. Die beiden Ebenen 24, 25 sind zur Fokalebene des Mikroskopobjektivs 2 parallel.

Die Fig. 4 und 5 zeigen die Durchführung eines Verfahrens zur Bestimmung von Kontraktionskräften von einer Muskelzelle 26. Hierbei werden mit Hilfe zweier optischer Pinzetten 27, 28 zwei mit der Muskelzelle 26 zusammenhängende Manipulationsstellen 29, 30 eingefangen. Die Manipulationsstellen 29, 30 sind jeweils mit der Muskelzelle 26 über eine Aktin-Verbindung 31 verbunden. Nach einer Objektmanipulation durch einen nicht eingezeichneten weiteren Manipulationslichtstrahl wird das in der Muskelzelle 26 präparierte Caged-Compuond-Release-Calcium freigesetzt, wodurch sich die Muskelzelle 26 zusammenzieht, was mit den beiden Pfeilen in den Bildausschnitten 22, 23 angedeutet ist. Die Muskelzelle 26 wird vor, während und nach der Objektmanipulation ständig detektiert, so dass die Ortsänderung der Manipulationsstellen 29, 30, die sich aufgrund der Kontraktion der Muskelzelle 26 ergeben haben, detektiert werden kann und somit eine quantitative Auswertung des Kontraktionskräfte möglich ist.

Das detektierte Objekt 1, 26 wird samt Manipulationsstelle 29, 30 auf dem Monitor 31 des Bedienerrechners 32 des konfokalen Rastermikroskops dargestellt. Die Darstellung erfolgt hierbei zweidimensional, beispielsweise in Form der xy- und yz-Schnittebenen 22, 23 der Fig. 4 und 5. In Fig. 4 ist schematisch das Abtastmuster 36 des Beleuchtungsfokusses dargestellt, wobei zur einfacheren Darstellung das Abtastmuster in y-Richtung einen großen Abtastabstand aufweist.

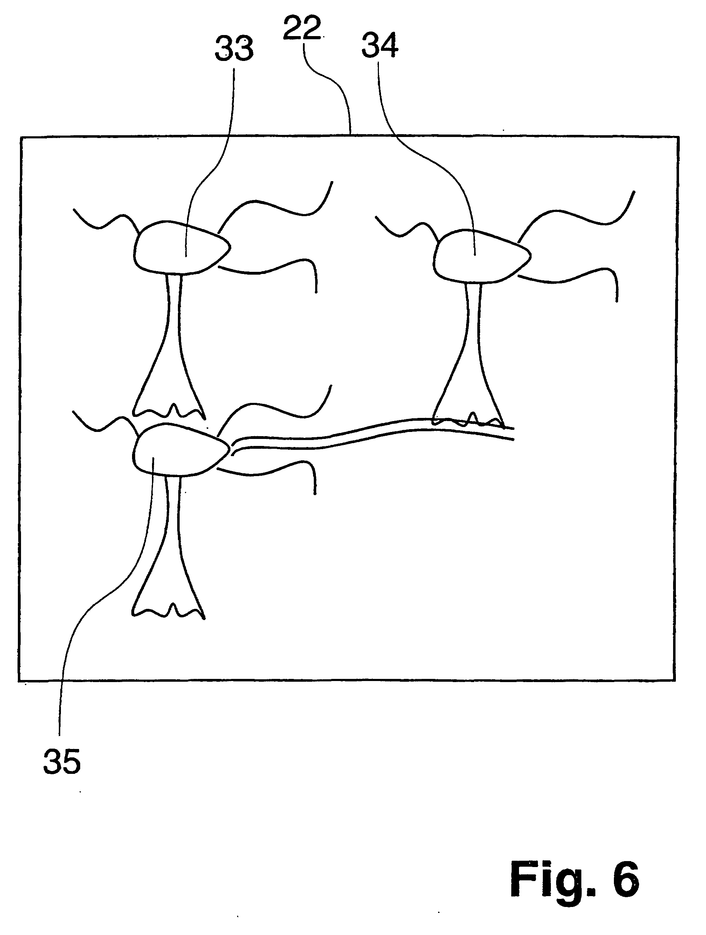

In Fig. 6 ist eine xy-Schnittebene 22 einer Bildaufnahme von drei Zellen 33, 34, 35 gezeigt. Bei diesen Zellen wird die Informationsweiterleitung von Zelle zu Zelle untersucht. Hierbei werden die Zellen 34 und 35 jeweils mit UV-Licht zur Objektmanipulation beaufschlagt, wodurch in die Zellen präparierte Caged-Calcium-Verbindungen aufgebrochen werden und das freiwerdende Calcium eine Reaktion in der Zelle 34 bzw. 35 auslöst. Eine Reaktion der Zelle 35 zur Zelle 33 kann ausbleiben, wenn innerhalb eines bestimmten Zeitfensters die Reizinformation der Zelle 34 bei der Zelle 33 eintrifft. Hierzu werden die beiden Zellen 34, 35 definiert zeitversetzt mit UV-Licht beaufschlagt. Dieses Zeitintervall wird bei erneuten Versuchsdurchführungen stetig verringert, bis die beiden Zellen 34, 35 quasi gleichzeitig mit UV-Licht beaufschlagt werden. Ein ebenfalls in die Zellen präparierter Fluoreszenz-Calcium-Indikator ermüglicht die Detektion der Informationsweiterleitung.

## Patentansprüche

1. Vorrichtung zur Untersuchung und Manipulation von mikroskopischen Objekten (1), mit einem Mikroskop (2), mindestens einer zur Beleuchtung des Objekts (1) dienenden ersten Lichtquelle (3, 4), die einen Beleuchtungsstrahlengang (5) definiert, einem zur Detektion des vom Objekt (1) zurückkehrenden Lichts dienenden Detektor (6), der einen Detektionsstrahlengang (7) definiert, einer zur Objektmanipulation dienenden zweiten Lichtquelle (8) die einen Manipulationslichtstrahlengang (9) definiert, einer ersten Strahlablenkvorrichtung (12) im Beleuchtungsstrahlengang (5) und einer zweiten Strahlablenkvorrichtung (16) im Manipulationslichtstrahlengang (9) vorgesehen sind, wobei die Ablenkung des Lichts im Beleuchtungsstrahlengang (5) unabhängig von der Ablenkung des Licht im Manipulationslichtstrahlengangs (9) erfolgt, **dadurch gekennzeichnet, dass** der Manipulationslichtstrahlengang (9) und der Detektions/Beleuchtungsstrahlengang (7, 5) über einen Scanspiegel (13) einer Strahlablenkvorrichtung (12) zusammenführbar sind und der Scanspiegel für einen des beiden Strahlengänge transparent ist und für den anderen als Spiegel wirkt.

2. Vorrichtung nach Anspruch 1, **dadurch gekennzeichnet, dass** die Fokusposition des Manipulationslichts (9) entlang der optischen Achse veränderbar ist, wobei die Veränderung der Fokusposition durch zwischen Lichtquelle (8) und Objekt (1) verschiebbar angeordnete Fokussiermittel erfolgt.

3. Vorrichtung nach Anspruch 2, **dadurch gekennzeichnet, dass** die Veränderung der Manipulationslichtfokusposition mit einer Veränderung der Beleuchtungslichtfokusposition einhergeht.

4. Vorrichtung nach einem der Ansprüche 1 bis 3 **dadurch gekennzeichnet, dass** der Manipulationslichtstrahl als optische Pinzette (27, 28) und/oder als Nanoskalpell dient, und dass zur Veränderung der Form des Manipulationslichtfokusses eine Zoom-Optik im Manipulationslichtstrahlengang (9) vorgesehen ist..

5. Vorrichtung nach einem der Ansprüche 1 bis 4, **dadurch gekennzeichnet, dass** am Mikroskop eine Mikroskopschnittstelle vorgesehen ist, an die Strahlablenkvorrichtung bzw. die Strahlablenkvorrichtungen (12, 16) ankoppelbar sind.

6. Vorrichtung nach einem der Ansprüche 1 bis 5, **dadurch gekennzeichnet, dass** zum Einkoppeln des Beleuchtungs- und/oder Manipulationslichts mindestens ein spektral selektives Element dient.

7. Vorrichtung nach Anspruch 6, **dadurch gekennzeichnet, dass** das spektral selektive Element ein AOTF (Acousto-Optical-Tunable-Filter), AOBS (Acousto-Optical-Beam-Splitter), AOD (Acousto-Optical-Deflector) und/oder EOM (Electro-Optical-Modulator) umfasst und von einem Steuerrechner vorzugsweise in Abhängigkeit der Beleuchtungsund/oder Manipulationsstrahlposition ansteuerbar ist.

## Claims

1. Device for examining and manipulating microscopic objects (1), with a microscope (2), at least one first light source (3, 4) which is used to illuminate the object (1) and defines an illumination beam path (5), a detector (6) which is used to detect the light returning from the object (1) and defines a detection beam path (7), a second light source (8) which is used for the object manipulation and defines a manipulation light beam path (9), a first beam deflection device (12) in the illumination beam path (5), and a second beam deflection device (16) in the manipulation light beam path (9), the deflection of the light in the illumination beam path (5) being performed independently of the deflection of the light in the manipulation beam path (9), **characterized in that** the manipulation beam path (9) and the detection/illumination beam paths (7, 5) can be combined via a scanning mirror (13) of one beam deflection device (12), and the scanning mirror is transparent for one of the two beam paths and acts as a mirror for the other.

2. Device according to Claim 1, **characterized in that** the focus position of the manipulation light (9) along the optical axis is changeable, the change of the focus position being carried out using focusing means moveably arranged between the light source (8) and the object (1).

3. Device according to Claim 2, **characterized in that** the change of the manipulation light focus position is accompanied by a change of the illumination light focus position.

4. Device according to one of Claims 1 to 3, **characterized in that** the manipulation light beam is used as optical tweezers (27, 28) and/or as a nanoscalpel, and **in that** a zoom lens is provided in the manipulation light beam path (9) for changing the shape of the manipulation light focus.

5. Device according to one of Claims 1 to 4, **characterized in that** provided at the microscope is a microscope interface to which the beam deflecting device or the beam deflecting devices (12, 16) can be coupled.

6. Device according to one of Claims 1 to 5, **characterized in that** at least one spectrally selective element is used to input the illumination and/or manipulation light.

7. Device according to Claim 6, **characterized in that** the spectrally selective element comprises an AOTF (acousto-optical tunable filter), an AOBS (acousto-optical beam splitter), an AOD (acousto-optical deflector) and/or an EOM (electro-optical modulator) and can be driven by a control computer, preferably as a function of the illumination and/or manipulation beam position.

## Revendications

1. Appareil d'examen et de manipulation d'objets microscopiques (1), comprenant un microscope (2), au moins une première source de lumière (3, 4) servant à éclairer l'objet (1), laquelle définit un trajet de rayon d'éclairage (5), un détecteur (6) servant à la détection de la lumière réfléchie par l'objet (1), lequel définit un trajet de rayon de détection (7), une deuxième source de lumière (8) servant à la manipulation de l'objet, laquelle définit un trajet de rayon lumineux de manipulation (9), un premier dispositif de déviation de rayon (12) dans le trajet de rayon d'éclairage (5) et un deuxième dispositif de déviation de rayon (16) dans le trajet de rayon lumineux de manipulation (9), la déviation de la lumière dans le trajet de rayon d'éclairage (5) étant indépendante de la déviation de la lumière dans le trajet de rayon lumineux de manipulation (9), **caractérisé en ce que** le trajet de rayon lumineux de manipulation (9) et le trajet de rayon de détection / d'éclairage (7, 5) peuvent être regroupés par le biais d'un miroir de balayage (13) d'un dispositif de déviation de rayon (12) et le miroir de balayage est transparent pour l'un des deux trajets de rayon et fait office de miroir pour l'autre.

2. Appareil selon la revendication 1, **caractérisé en ce que** la position du foyer de la lumière de manipulation (9) le long de l'axe optique peut être modifiée, la modification de la position du foyer étant effectuée par des moyens de focalisation disposés de manière à pouvoir coulisser entre la source de lumière (8) et un objet (1).

3. Appareil selon la revendication 2, **caractérisé en ce que** la modification de la position du foyer de la lumière de manipulation est accompagnée d'une modification de la position du foyer de la lumière d'éclairage.

4. Appareil selon l'une des revendications 1 à 3, **caractérisé en ce que** le rayon lumineux de manipulation fait office de pincette optique (27, 28) et/ou de nanoscalpel et qu'un zoom optique est prévu dans le trajet de rayon lumineux de manipulation (9) pour modifier la forme du foyer de la lumière de manipulation.

5. Appareil selon l'une des revendications 1 à 4, **caractérisé en ce que** sur le microscope est prévue une interface de microscope à laquelle peuvent être raccordés le dispositif de déviation de rayon ou les dispositifs de déviation de rayon (12, 16).

6. Appareil selon l'une des revendications 1 à 5, **caractérisé en ce qu'**au moins un élément à sélection spectrale sert à l'injection de la lumière d'éclairage et/ou de manipulation.

7. Appareil selon la revendication 6, **caractérisé en ce que** l'élément à sélection spectrale comprend un AOTF (filtre accordable opto-acoustique), un AOBS (fractionneur de faisceau opto-acoustique), un AOD (déflecteur opto-acoustique) et/ou un EOM (modulateur électro-optique) et qu'il peut être commandé par un ordinateur de commande, de préférence en fonction de la position du rayon d'éclairage et/ou de manipulation.
